# EUROPEAN PATENT SPECIFICATION

(11) **EP 4 201 896 B1**
(45) Date of publication and mention of the grant of the patent: **25.11.2026**
(21) Application number: 21216969.2
(22) Date of filing: 22.12.2021
(51) Int. Cl.: C03B 17/04, C03B 23/09, C03C 3/091

(54) **GLASS TUBE FOR PHARMACEUTICAL CONTAINERS AND PROCESS FOR THE PRODUCTION OF A GLASS TUBE**
GLASROHR FÜR PHARMAZEUTISCHE BEHÄLTER UND VERFAHREN ZUR HERSTELLUNG EINES GLASROHRS
TUBE DE VERRE POUR RÉCIPIENTS PHARMACEUTIQUES ET PROCÉDÉ DE PRODUCTION DE TUBE DE VERRE

(43) Date of publication of application: 28.06.2023
(73) Proprietor: SCHOTT AG, 55122 Mainz (DE)
(72) Inventor: Zeitler, Jonas, 95100 Selb (DE); Hamann, Carsten, 95692 Konnersreuth (DE); Völkl, Franz, 95688 Friedenfels (DE); Zettl, Oliver, 95666 Mitterteich (DE); Braun, Patrick, 95697 Nagel (DE)
(74) Representative: Fuchs Patentanwälte Partnerschaft mbB

(56) References cited:
- EP-A2- 1 369 389
- DE-A1- 10 332 176
- DE-A1- 102011 013 623
- US-A1- 2021 284 566

## Description

The invention relates to a glass tube for pharmaceutical containers and a process for the production of a glass tube.

### Background

Glass tubes for pharmaceutical containers are known and widely encountered in hospitals and doctor's offices. There are high and continuously increasing demands on these glass tubes in order to guarantee the quality and integrity of the pharmaceuticals they contain.

Glass tubes for pharmaceutical containers are typically manufactured from a glass melt which is drawn into a glass tube. During subsequent steps the drawn glass tube is cut into portions which are further processed into e.g. glass vials, glass ampoules, glass cartridges or glass syringes. In some glass tubes a ventilation hole is introduced.

In the art, several problems are known that affect the performance and suitability of the glass tubes for the purpose of being used for pharmaceutical containers.

Glass tubes for pharmaceutical containers are a mass product. Despite their putative simplicity and low cost, high-quality demands are placed on them and need to be ensured during and after manufacture and are thus subject to quality control before sale. In particular, contaminations are not acceptable, as even miniscule amounts of contaminants may have inferior negative effect on the quality of pharmaceutical products.

Glass tubes for pharmaceutical containers are made from glass compositions melting at high temperatures. The reason is that excellent hydrolytic resistance, i.e. one of the fundamental requirements of glass for pharmaceutical containers, is based on glass constituents with very high melting points, e.g. SiO₂ and Al₂O₃. Hence, during production, high melting temperatures may be necessary to achieve melt viscosities sufficient for homogenization and removal of bubbles from the melt. However, high melting temperatures also put high demands on the material of the melting furnace and refining tank. For example, the dissolution of material from the melting and/or refining furnace into the glass melt should be avoided by all means.

EP1369389 A2 discloses a glass tube having a closed end with a ventilation hole near it. The tube is made by providing a glass melt, forming a tube from it, cutting the tube, forming a closed end and introducing the ventilation hole.

DE10332176 A1 teaches reducing contamination in glass tubes through provision of an air stream.

US2021284566 A1 discloses the presence of a ventilation hole during closing the end of a glass tube.

DE102011013623 A1 teaches a ventilation hole near a closed end of a glass tube.

Current production processes already provide for good quality standards. Nevertheless, the rare occurrence of contaminants in glass tubes has been reported, so that their prevention remains a constant focus and issue of attention for manufacturers of pharmaceutical containers.

There remains a need to provide for sufficient and constant product monitoring to ensure the desired high-quality demands. Accordingly, there is a related as well as an independent demand that allows for a low cost, high-throughput and in-process control of the quality of the manufactured glass tubes.

The above objects are solved by the subject-matter of the claims and by the subject-matter described here below.

### Summary of the invention

In a first aspect, the invention relates to a glass tube for pharmaceutical containers, the glass tube having an inner surface and an outer surface, the glass tube having an inner diameter dᵢ and an outer diameter dₒ, the glass tube having a first end and a second end, the glass tube having a first location, wherein the first location is at a distance of 400 mm from the first end, the glass tube having a first intermediate location, wherein the first intermediate location is at a distance of 15 mm from the first end, wherein the first end is formed into a first closed end, wherein preferably also the second end is formed into a second closed end, wherein a ventilation hole is located within a first vicinity of the first closed end, wherein the first vicinity is between the first intermediate location and the first location, wherein ToF-SIMS signals are measurable on the inner surface in the first vicinity, including an Na₂F⁺ signal and an ³⁰Si⁺ signal, wherein an area on the inner surface in the first vicinity, having a ratio of an integrated Na₂F⁺ signal to an integrated ³⁰Si⁺ signal of at least 0.10, is 36 mm² or less, wherein the Na₂F⁺ signal and the ³⁰Si⁺ signal are integrated over a depth of 100 nm.

In a second and/or related aspect, the invention relates to a glass tube for pharmaceutical containers, the glass tube having an inner surface and an outer surface, the glass tube having an inner diameter dᵢ and an outer diameter dₒ, the glass tube having a first end and a second end, the glass tube having a first location, wherein the first location is at a distance of 400 mm from the first end, the glass tube having a first intermediate location, wherein the first intermediate location is at a distance of 15 mm from the first end, wherein the first end is formed into a first closed end, wherein preferably also the second end is formed into a second closed end, wherein a ventilation hole is located within a first vicinity of the first closed end, wherein the first vicinity is between the first intermediate location and the first location, the glass tube having a length lₐ along its longitudinal axis, the glass tube further having a middle section, wherein the middle section extends to a distance of 5 dᵢ centred around the position of 0.5 lₐ along the longitudinal axis, wherein the glass tube has a ratio between the fluorescence emission determined at the first vicinity and the fluorescence emission determined at the middle section of at least 0.6.

The invention thus provides a glass tube for pharmaceutical containers with a ventilation hole which allows high-throughput in-process screening via a fluorescence assay. The glass tubes of this disclosure have an improved fluorescence level as compared to conventional glass tubes. The inventors assume that this improved fluorescence level is due to a reduced level of deposited material on the inner surface of the first vicinity of the glass tube. It appears that the reduced level of contaminants increases the length of a travel path of light of an excitation wavelength within the glass tube wall because the portion of excitation light that is reflected at the inner surface of the glass tube is increased. This reflected portion of excitation light incident upon the glass tube via the outer surface enters the glass tube wall and is reflected at the inner surface so that the light passes through the glass tube wall twice and achieves stronger excitation of fluorescent species. It was found that a certain level of the contamination at the inner surface within the first vicinity appears to reduce the amount of light reflected at the inner surface, thereby reducing the emission of fluorescence from any fluorescent compounds of the glass tube. The glass tubes of this disclosure have reduced contamination at the inner surface of the first vicinity thereby increasing a fluorescence signal, or, phrased differently, reducing the negative impact of any contamination on fluorescence signal intensity. A stronger signal means that smaller amounts of fluorescent components can be detected in a fluorescence assay. It also means that a higher signal-to-noise ratio is achieved which allows for a higher reliability in a high-throughput assay. Thus, glass tubes of this invention allow high-throughput in-process screening via a fluorescence assay. The glass tubes of this invention show a residual fluorescence caused by fluorescent components intentionally present in the glass composition, such as e.g. Fe₂O₃, TiO₂, ZrO₂, CeO₂, As₂O₃, K₂O.

ToF-SIMS (Time-of-Flight Secondary-Ion-Mass-Spectrometry) is a sensitive means to characterise glass surfaces and thereby lends itself to assess the inner surface of glass tubes. The inventors have established conditions and accordingly provided a glass tube for pharmaceutical containers with a ventilation hole, wherein deposited material resulting from manufacturing have been minimised compared to glass tubes known in the art. An integrated Na₂F⁺ signal to an integrated ³⁰Si⁺ signal serves as a fingerprint and/or an indication of deposited material on the inner glass surface which is characteristic of a glass tube for pharmaceutical containers. The glass tube according to the invention advantageously minimises the area in the vicinity of the first ventilation hole, where a characteristic signal can be detected, and hence for an increased fluorescence signal in the first vicinity.

Fluorescent impurities from the glass melt, for example ZrO₂ which may stem from the melting tank during the melting of a batch of glass raw materials, display fluorescence which can be detected in the obtained glass tube. The following phenomenon has been considered to explain why the minimisation of deposited material on the inner glass surface of the glass tube improves fluorescence detection: An excitation light beam can be directed on the outer surface of a glass tube and will be refracted into the glass and totally internally reflected at the glass-air interface towards the inner part of the glass tube. Along its light path inside the glass tube, (residual) fluorescent components will be excited whose fluorescence can be detected orthogonally from the excitation beam. In case the inner surface of the glass tube is affected by deposited material resulting from manufacturing, total internal reflection of the excitation light beam will be frustrated which leads to a loss of excitation light at the glass-air interface and/or a reduction excitation light intensity. This loss in excitation light (intensity) directly correlates with a loss in fluorescence emission which is readily detectable by a fluorescence detector. A suitable fluorescence detector can be integrated into the manufacturing apparatus and serves as a direct way of integrated product control. The absence of deposited material in the first vicinity can be confirmed by ToF-SIMS measurement and/or by comparing the residual fluorescence of the middle section of the glass tube with the residual fluorescence in the first vicinity. If the first vicinity displays deposited material originating from e.g. the introduction of the ventilation hole, fluorescence intensity will be low in the first vicinity compared to the middle section. The ToF-SIMS signal can be used to confirm absence of deposited material even in glass tubes without residual fluorescence.

In a third aspect, the invention relates to a process for the production of a glass tube for pharmaceutical containers as defined in claim 12.

The inventors have thus established a process for the production of a glass tube for pharmaceutical containers which allows high-throughput in-process screening via a fluorescence assay.

The process according to the invention provides a glass tube for pharmaceutical containers in which one of the open ends is formed into a closed end and wherein a ventilation hole is introduced into the glass tube and ensures an improvement in the inner surface conditions by means of employing suction during at least part of the introduction step and/or directly after the introduction step. It has been observed that due to the high temperatures needed for the introduction of a ventilation hole into the glass tube, parts of the glass composition may evaporate and subsequently condense on the inner surface of the glass tube, foremost in the vicinity near the closed end. In rare and extreme cases even visible deposits, such as e.g. micron-sized water stains, have been observed. The process according to the invention thus provides an effective counter-measure against deposited material on the inner surface of glass tubes.

### Description of the drawings

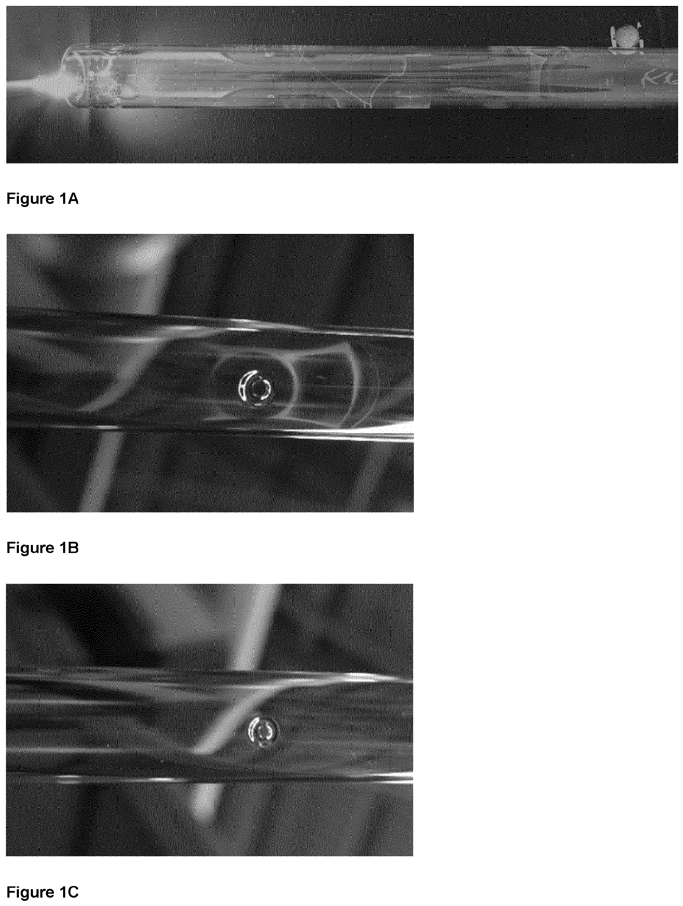

- **Figure 1A**: shows a glass tube manufactured according to a process in the art displaying water stains on the inner surface.
- **Figure 1B**: shows a glass tube manufactured according to a process in the art displaying borates deposited on the inner glass surface
- **Figure 1C**: shows a glass tube manufactured according to a process of the invention.
- **Figure 2**: shows three-dimensional ToF-SIMS mapping analyses acquired on affected inner surface regions of the glass tube shown in Figure 1A. The analysis is based on positive ion species detectable by ToF-SIMS.
- **Figure 3**: shows an analysis of ToF-SIMS data obtained from five positions of an inner surface of a glass tube: The data relating to "Reference" and "Reference 2" are devoid of deposited material; the data designated as "weaker" and "weak" display a signal originating from detectable stains; and the data denoted "strong" displays a signal originating from a severe stain. The monitored ToF-SIMS signal is based on a ratio of an integrated Na₂F⁺ signal to an integrated ³⁰Si⁺ signal, wherein the Na₂F⁺ signal and the ³⁰Si⁺ signal are integrated over a depth of 100 nm.
- **Figures 4A-E**: shows the recording of the underlying ToF-SIMS data over a depth of more than 100 nm using the analysis and sputter parameters given in the Methods section. The recordings relate to the data shown in Figure 3,

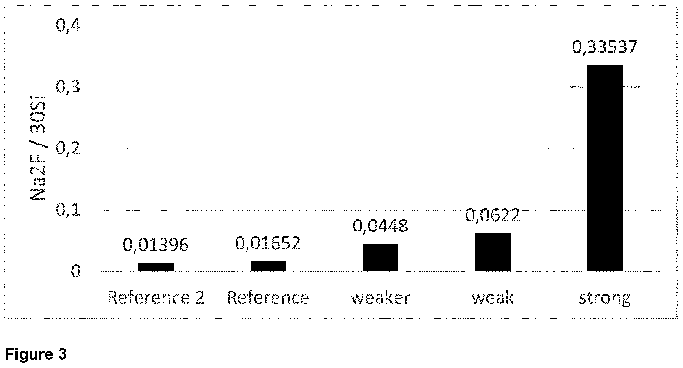

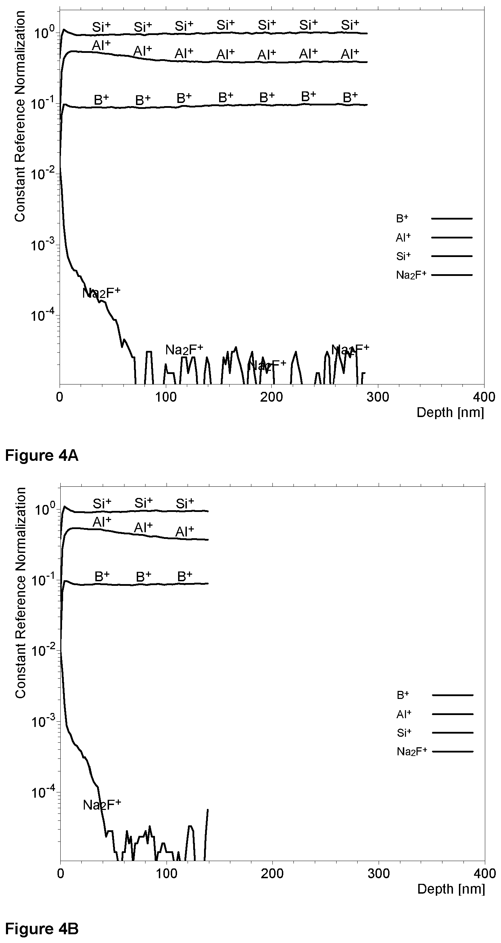

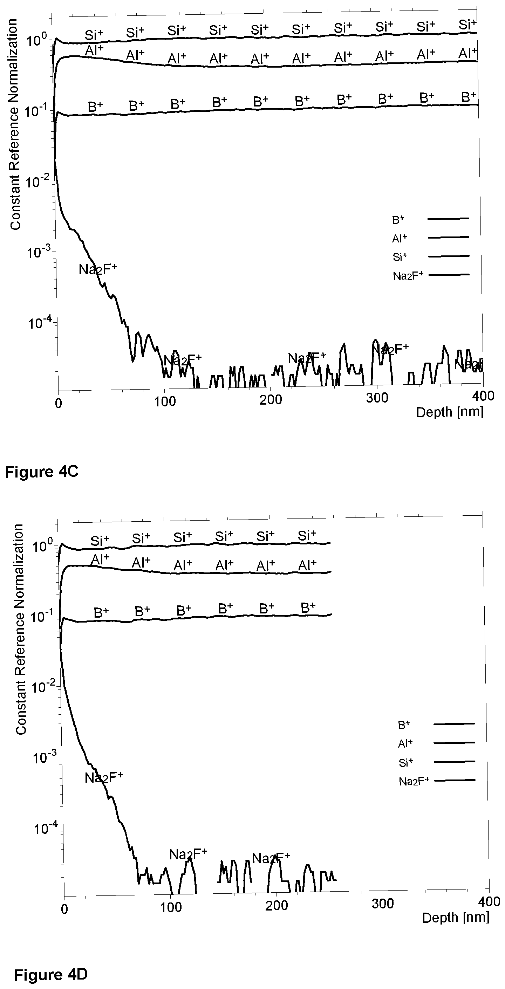

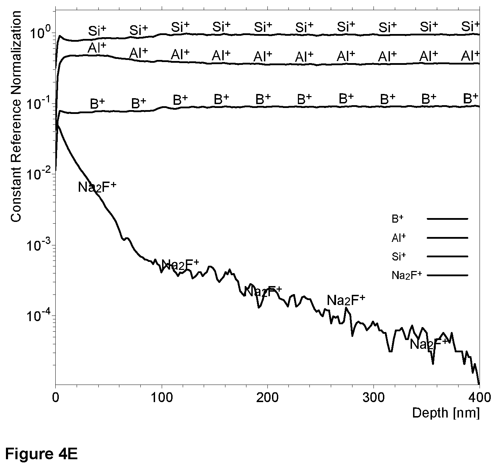

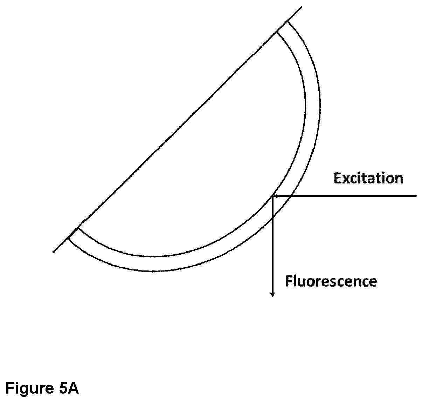

- **Figure 5A**: wherein Figure 4A relates to "Reference 2", Figure 4B to "Reference", Figure 4C to "weaker", Figure 4D to "weak" and Figure 4E to the "strong" signal shown in Figure 3. shows the principle of the high-throughput fluorescence assay for monitoring the quality of the glass tubes. Excitation light from a xenon lamp was spectrally filtered by a monochromator and shone on a glass tube to allow penetration into the glass wall. Inside the glass wall, the excitation light beam is totally internally reflected. Fluorescence emission is collected in a right angle from the excitation light beam and spectrally filtered by a monochromator.
- **Figure 5B**: shows the fluorescence spectra acquired from six positions of an inner surface of a glass tube. Reference positions 1 and 2 are devoid of deposited material, such as e.g. water stains on the inner surface, and display the highest fluorescence intensity. In comparison, glass tubes having deposited material, in agreement with the ToF-SIMS data in Figure 3 and 4A to E and classified as 'weak 1', 'weak 2' and 'strong', display significantly reduced fluorescence emission.

### Detailed description

In a first aspect, the invention relates to a glass tube for pharmaceutical containers, the glass tube having an inner surface and an outer surface, the glass tube having an inner diameter dᵢ and an outer diameter dₒ, the glass tube having a first end and a second end, the glass tube having a first location, wherein the first location is at a distance of 400 mm from the first end, the glass tube having a first intermediate location, wherein the first intermediate location is at a distance of 15 mm from the first end, wherein the first end is formed into a first closed end, wherein preferably also the second end is formed into a second closed end, wherein a ventilation hole is located within a first vicinity of the first closed end, wherein the first vicinity is between the first intermediate location and the first location, wherein ToF-SIMS signals are measurable on the inner surface in the first vicinity, including an Na₂F⁺ signal and an ³⁰Si⁺ signal, wherein an area on the inner surface in the first vicinity, having a ratio of an integrated Na₂F⁺ signal to an integrated ³⁰Si⁺ signal of at least 0.10, is 36 mm² or less, wherein the Na₂F⁺ signal and the ³⁰Si⁺ signal are integrated over a depth of 100 nm.

ToF-SIMS (Time-of-Flight Secondary-Ion-Mass-Spectrometry) is a sensitive means to assess glass surfaces and thereby lends itself to assess the inner surface of glass tubes. The inventors have established conditions and accordingly provided a glass tube for pharmaceutical containers with a ventilation hole, wherein deposited material resulting from manufacturing has been minimised compared to glass tubes known in the art. An integrated Na₂F⁺ signal to an integrated ³⁰Si⁺ signal serves as a fingerprint and/or an indication of deposited material on the inner glass surface which is characteristic of a glass tube for pharmaceutical containers.

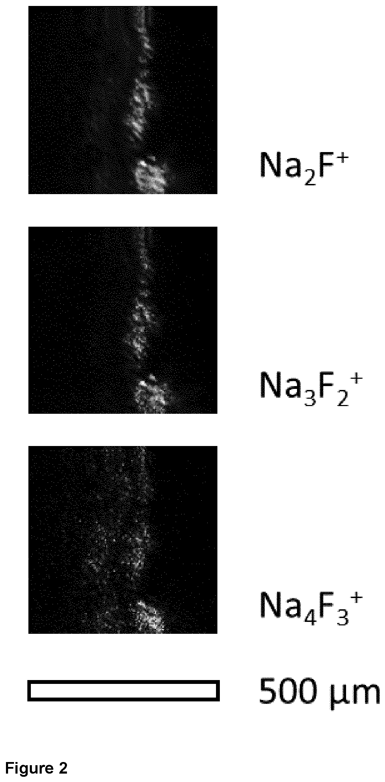

To ensure a rigorous and thorough assessment of the inner surface of the glass tube, the Na₂F⁺ signal was integrated over a depth of 100 nm and has been normalised to the ³⁰Si signal in the same depth range. The ³⁰Si isotope has been chosen to avoid detector saturation of the ²⁸Si signal. Three-dimensional (3D) ToF-SIMS analysis allows the measurement of maps on an inner glass surface. The area resolution of 3D ToF-SIMS analyses has been estimated to around 4 x 4 µm, i.e. 16 µm² (cf. Figure 2).

In one embodiment of the glass tube, the first vicinity is characterised by a ToF-SIMS signal, wherein an area, having a ratio of an integrated Na₂F⁺ signal to an integrated ³⁰Si⁺ signal of at least 0.10, wherein the Na₂F⁺ signal and the ³⁰Si⁺ signal are integrated over a depth of 100 nm, is 36 mm² or less, 25 mm² or less, 20 mm² or less, 16 mm² or less, 10 mm² or less, 5 mm² or less, 3 mm² or less, or 1 mm² or less. Advantageously, the glass tube may only display small areas of deposited material above a detection threshold of an integrated Na₂F⁺ signal to an integrated ³⁰Si⁺ signal of at least 0.10.

In one embodiment of the glass tube, the first vicinity is characterised by a ToF-SIMS signal, wherein an area, having a ratio of an integrated Na₂F⁺ signal to an integrated ³⁰Si⁺ signal of at least 0.10 and not more than 0.50, wherein the Na₂F⁺ signal and the ³⁰Si⁺ signal are integrated over a depth of 100 nm, is 36 mm² or less, 25 mm² or less, 20 mm² or less, 16 mm² or less 10 mm² or less, 5 mm² or less, 3 mm² or less, or 1 mm² or less. In one embodiment of the glass tube, the first vicinity is characterised by a ToF-SIMS signal, wherein an area, having a ratio of an integrated Na₂F⁺ signal to an integrated ³⁰Si⁺ signal of at least 0.10 and not more than 0.50, wherein the Na₂F⁺ signal and the ³⁰Si⁺ signal are integrated over a depth of 100 nm, is between 36 mm² and 0.0001 mm², between 10 mm² and 0.001 mm², between 3 mm² and 0.01 mm², or between 1 mm² and 0.1 mm².

In one embodiment of the glass tube, the first vicinity is characterised by a ToF-SIMS signal, wherein an area, having a ratio of an integrated Na₂F⁺ signal to an integrated ³⁰Si⁺ signal of at least 0.10, wherein the Na₂F⁺ signal and the ³⁰Si⁺ signal are integrated over a depth of 100 nm, is 0 mm². In one embodiment of the glass tube, the first vicinity is characterised by a ToF-SIMS signal, wherein an area, having a ratio of an integrated Na₂F⁺ signal to an integrated ³⁰Si⁺ signal of at least 0.10 and not more than 0.50, wherein the Na₂F⁺ signal and the ³⁰Si⁺ signal are integrated over a depth of 100 nm, is 0 mm².

Advantageously, the glass tube may be fully devoid of deposited material above a detection threshold of an integrated Na₂F⁺ signal to an integrated ³⁰Si⁺ signal of at least 0.10.

In one embodiment, the ToF-SIMS signal is generated using Ga⁺ at 25 keV as a primary ion source and at a primary ion current of 1pA, preferably at a mass resolution Δm/m at a mass 65 of >5000, an analysis area of 50 x 50 µm², using O₂⁺ at 1 keV as a sputter ion at a sputter ion current of 300 nA and a sputter area of 300 x 300 µm², optionally using an electron floodgun for charge compensation.

In one embodiment, the ToF-SIMS signal is determined by normalising the counts of the detected ion species, such as e.g. Na₂F⁺, to the counts of ³⁰Si⁺ ions which are, by definition, set to 1, determining the sputter depth by measurement of the crater depth using white-light microscopy, and calculating the quotient between the integrated intensities of Na₂F⁺ and ³⁰Si⁺ within the outer 100 nm of the inner surface. The quotient between the integrated intensities of Na₂F⁺ and ³⁰Si⁺ within the outer 100 nm of the inner surface may be expressed as Σ Na₂F⁺ / Σ ³⁰Si⁺.

In a second aspect, the invention relates to a glass tube for pharmaceutical containers, the glass tube having an inner surface and an outer surface, the glass tube having an inner diameter dᵢ and an outer diameter dₒ, the glass tube having a first end and a second end, the glass tube having a first location, wherein the first location is at a distance of 400 mm from the first end, the glass tube having a first intermediate location, wherein the first intermediate location is at a distance of 15 mm from the first end, wherein the first end is formed into a first closed end, wherein preferably also the second end is formed into a second closed end, wherein a ventilation hole is located within a first vicinity of the first closed end, wherein the first vicinity is between the first intermediate location and the first location, the glass tube having a length lₐ along its longitudinal axis, the glass tube further having a middle section, wherein the middle section extends to a distance of 5 dᵢ centred around the position of 0.5 lₐ along the longitudinal axis, wherein the glass tube has a ratio between the fluorescence emission determined at the first vicinity and the fluorescence emission determined at the middle section of at least 0.6.

The inventors have established that fluorescent components which are intentionally present in the glass composition, such as e.g. Fe₂O₃, TiO₂, ZrO₂, CeO₂, As₂O₃, K₂O, provide for fluorescence of the obtained glass tube. One of these fluorescing oxide components, for example ZrO₂, may stem from the melting tank during the melting of a batch of glass raw materials. The invention provides a glass tube for pharmaceutical containers with a ventilation hole, wherein deposited material on the inner glass surface of the glass tube is minimised and/or avoided compared to glass tubes known in the art, which allows high-throughput in-process screening via a fluorescence assay.

The following phenomenon has been found and has been turned into an industrial application: An excitation light beam can be directed on the outer surface of a glass tube and will be refracted into the glass tube and totally internally reflected at the glass-air interface inside the glass tube. Along its light path inside the glass tube, fluorescent components will be excited whose fluorescence can be detected orthogonally from the excitation beam. In case the inner surface of the glass tube has deposited material by e.g. components resulting from manufacturing, total internal reflection of the excitation light beam will be frustrated which leads to a loss of excitation light at the glass-air interface and/or a reduction excitation light intensity. This loss in excitation light (intensity) directly correlates with a loss in fluorescence emission which is readily detectable by a fluorescence detector. A suitable fluorescence detector can be integrated into the manufacturing apparatus and serves as a direct way of integrated product control.

In one embodiment, fluorescence emission is measured at an excitation wavelength of 290 nm and at an emission wavelength of 370 nm, wherein the slit width for excitation is 10 nm, and wherein the slit width for emission is 10 nm, wherein optionally the integration is 100 ms, wherein the glass tube is positioned in such a way that an angle between an incident excitation light beam and a reflected excitation light beam is around 90°, wherein fluorescence emission is detected at an angle of around 90°.

In one embodiment a glass tube for pharmaceutical containers is provided, the glass tube having an inner surface and an outer surface, the glass tube having an inner diameter dᵢ and an outer diameter dₒ, the glass tube having a first end and a second end, the glass tube having a first location, wherein the first location is at a distance of 400 mm from the first end, the glass tube having a first intermediate location, wherein the first intermediate location is at a distance of 15 mm from the first end, wherein the first end is formed into a first closed end, wherein preferably also the second end is formed into a second closed end, wherein a ventilation hole is located within a first vicinity of the first closed end, wherein the first vicinity is between the first first intermediate location and the first location, the glass tube having a length lₐ along its longitudinal axis, the glass tube further having a middle section, wherein the middle section extends to a distance of 5 dᵢ centred around the position of 0.5 lₐ along the longitudinal axis, wherein the glass tube has a ratio between the fluorescence emission determined at the first vicinity and the fluorescence emission determined at the middle section of at least 0.6, wherein fluorescence emission is measured at an excitation wavelength of 290 nm and at an emission wavelength of 370 nm, wherein the slit width for excitation is 10 nm, and wherein the slit width for emission is 10 nm, wherein optionally the integration is 100 ms, wherein the glass tube is positioned in such a way that an angle between an incident excitation light beam and a reflected excitation light beam is around 90°, wherein fluorescence emission is detected at an angle of around 90°.

In one embodiment, the glass tube has a ratio between the fluorescence emission determined at the first vicinity and the fluorescence emission determined at the middle section of at least 0.6, at least 0.7, at least 0.8, at least 0.9, or at least 0.95. In one embodiment, the glass tube has a ratio between the fluorescence emission determined at the first vicinity and the fluorescence emission determined at the middle section of 1.0 or less, 0.99 or less, 0.98 or less, 0.97 or less, or 0.96 or less. In one embodiment, the glass tube has a ratio between the fluorescence emission determined at the first vicinity and the fluorescence emission determined at the middle section of 0.6 to 1.0, 0.7 to 0.99, 0.8 to 0.98, 0.9 to 0.97, or 0.95 to 0.96.

Advantageously, the glass tube has an inner surface at the first vicinity which resembles the inner surface of the middle section. In other words, the glass tube may display similar surface properties in both the first vicinity and the middle section reflecting a reduction and/or complete elimination of deposited material which may be found on the inner surface at the first vicinity.

In one embodiment of the glass tube, the inner surface comprises a deposit located in the first vicinity, wherein the deposit has a deposit area extending parallel to the inner surface of the glass tube, wherein the deposit area is 0.01 mm² to 36 mm², and wherein the deposit has a ratio of an integrated Na₂F⁺ signal to an integrated ³⁰Si⁺ signal of 0.0002 to less than 0.10, wherein the Na₂F⁺ signal and the ³⁰Si⁺ signal are integrated over a depth of 100 nm.

In one embodiment, the deposit located in the first vicinity of the inner surface extends parallel to the inner surface of the glass tube, having a deposit area of 0.01 mm² to 36 mm², and is identifiable and/or detectable by a ratio of an integrated Na₂F⁺ signal to an integrated ³⁰Si⁺ signal of 0.0002 to less than 0.10, wherein the Na₂F⁺ signal and the ³⁰Si⁺ signal are integrated over a depth of 100 nm.

In one embodiment, a deposit results from condensates and/or sublimates, such as sodium salts, e.g. NaCl and/or NaF, and/or borates, e.g. sodium borate, which may emanate through evaporation from the glass during the introduction of ventilation holes into the glass tube.

In one embodiment of the glass tube, the deposit area is 0.01 mm² to 1 mm² and the deposit comprises a ratio of an integrated Na₂F⁺ signal to an integrated ³⁰Si signal of 0.0002 to less than 0.025, or the deposit area is 0.01 mm² to 36 mm² and the deposit comprises a ratio of an integrated Na₂F⁺ signal to an integrated ³⁰Si signal of 0.0002 to less than 0.025.

In one embodiment, the deposit area is at least 0.01 mm², at least 0.03 mm², at least 0.1 mm², at least 0.2 mm², at least 0.3 mm², or at least 0.5 mm². In one embodiment, the deposit area is 36 mm² or less, 25 mm² or less, 20 mm² or less, 16 mm² or less, 10 mm² or less, 5 mm² or less, 3 mm² or less, or 1 mm² or less. In one embodiment, the deposit area is between 36 mm² and 0.01 mm², between 25 mm² and 0.03 mm², between 20 mm² and 0.05 mm², between 16 mm² and 0.07 mm², between 10 mm² and 0.1 mm², between 5 mm² and 0.2 mm², between 3 mm² and 0.3 mm², or between 1 mm² and 0.5 mm².

In one embodiment, the deposit comprises a ratio of an integrated Na₂F⁺ signal to an integrated ³⁰Si signal of at least 0.0002, at least 0.0005, at least 0.001, at least 0.002, at least 0.005, or at least 0.01. In one embodiment, the deposit comprises a ratio of an integrated Na₂F⁺ signal to an integrated ³⁰Si signal of 0.2 or less, 0.1 or less, 0.08 or less, 0.06 or less, 0.05 or less, 0.04 or less, or 0.025 or less. In one embodiment, the deposit comprises a ratio of an integrated Na₂F⁺ signal to an integrated ³⁰Si signal of 0.0002 to 0.2, 0.0005 to 0.1, 0.001 to 0.08, 0.002 to 0.06, 0.005 to 0.04, or 0.01 to 0.025.

In one embodiment of the glass tube, the deposit area is 0.01 mm² to 1 mm² and the deposit comprises a ratio of an integrated Na₂F⁺ signal to an integrated ³⁰Si signal of 0.0002 to 0.2, 0.0005 to 0.1, 0.001 to 0.08, 0.002 to 0.06, 0.005 to 0.04, or 0.01 to 0.025.

In one embodiment of the glass tube, the deposit comprises a ratio of an integrated Na₂F⁺ signal to an integrated ³⁰Si signal of 0.0002 to less than 0.025, wherein the deposit area is between 36 mm² and 0.01 mm², between 25 mm² and 0.03 mm², between 20 mm² and 0.05 mm², between 16 mm² and 0.07 mm², between 10 mm² and 0.1 mm², between 5 mm² and 0.2 mm², between 3 mm² and 0.3 mm², or between 1 mm² and 0.5 mm².

In one embodiment of the glass tube, at least 90% of the inner surface of the first vicinity, at least 99%, at least 99.9%, or at least 99.99%, are characterised by a ratio of an integrated Na₂F⁺ signal to an integrated ³⁰Si signal of 0.0002 to less than 0.025, wherein the Na₂F⁺ signal and the ³⁰Si⁺ signal are integrated over a depth of 100 nm.

In one embodiment of the glass tube, at least 99% of the inner surface of the first vicinity are characterised by a ratio of an integrated Na₂F⁺ signal to an integrated ³⁰Si signal of 0.0002 to 0.2, 0.0005 to 0.1, 0.001 to 0.08, 0.002 to 0.06, 0.005 to 0.04, or 0.01 to 0.025, wherein the Na₂F⁺ signal and the ³⁰Si⁺ signal are integrated over a depth of 100 nm.

In one embodiment of the glass tube, at least 99.99% of the inner surface of the first vicinity are characterised by a ratio of an integrated Na₂F⁺ signal to an integrated ³⁰Si signal of 0.0002 to 0.2, 0.0005 to 0.1, 0.001 to 0.08, 0.002 to 0.06, 0.005 to 0.04, or 0.01 to 0.025, wherein the Na₂F⁺ signal and the ³⁰Si⁺ signal are integrated over a depth of 100 nm.

In one embodiment, the glass tube has a "hydrolytic resistance" which is defined as the alkali leachability on the middle section of the inner surface, determined as Na₂O equivalents in an eluate prepared according to ISO 4802-2:2010, wherein the hydrolytic resistance is less than 0.5 µg cm⁻², less than 0.4 µg cm⁻², less than 0.3 µg cm⁻², less than 0.2 µg cm⁻², or less than 0.1 µg cm⁻².

In one embodiment, the glass tube has a hydrolytic resistance of at least 0.01 µg cm⁻², at least 0.02 µg cm⁻², at least 0.03 µg cm⁻², at least 0.04 µg cm⁻², or at least 0.05 µg cm⁻².

In one embodiment, the glass tube has a hydrolytic resistance from 0.01 to 0.5 µg cm⁻², 0.02 to 0.4 µg cm⁻², 0.03 to 0.3 µg cm⁻², 0.04 to 0.2 µg cm⁻², or 0.05 to 0.1 µg cm⁻².

### Glass composition

In one embodiment of the glass tube for pharmaceutical containers, the glass tube comprises a glass composition selected from the list of soda-lime glass, borosilicate glass, aluminosilicate glass, a glass comprising from 5 to 20 mol% B₂O₃, based on all oxides present in the glass composition.

The glass composition may comprise, among others, oxide species which inherently display at least to some fluorescence upon excitation with UV light, i.e. in the range of 100 to 380 nm, e.g. Fe₂O₃, TiO₂, ZrO₂, CeO₂, As₂O₃ and/or K₂O.

In one embodiment of the glass tube for pharmaceutical containers, the glass tube comprises a glass composition comprising 5 to 20 mol% B₂O₃ and/or 2 to 10 mol% Na₂O. Optionally, the glass composition comprises 60 to 85 mol% SiO₂, 5 to 20 mol% B₂O₃, 2 to 10 mol% Al₂O₃, 0 to 2 mol% Fe₂O₃, 2 to 10 mol% Na₂O, 0 to 5 mol% K₂O, 0 to 2 mol% BaO, 0 to 2 mol% CaO, and/or 0 to 10 mol% TiO₂, based on all oxides present in the glass composition.

In one embodiment, the glass composition comprises at least 60 mol% SiO₂, at least 62 mol% SiO₂, at least 64 mol% SiO₂, at least 66 mol% SiO₂, or at least 68 mol% SiO₂, based on all oxides present in the glass composition. In one embodiment, the glass composition comprises 85 mol% SiO₂ or less, 83 mol% SiO₂ or less, 81 mol% SiO₂ or less, 79 mol% SiO₂ or less, or 77 mol% SiO₂ or less, based on all oxides present in the glass composition. In one embodiment, the glass composition comprises 60 to 85 mol% SiO₂, 62 to 83 mol% SiO₂, 64 to 81 mol% SiO₂, 66 to 79 mol% SiO₂, or 68 to 77 mol% SiO₂, based on all oxides present in the glass composition.

In one embodiment, the glass composition comprises at least 5.0 mol% B₂O₃, at least 5.5 mol% B₂O₃, at least 6.0 mol% B₂O₃, at least 6.5 mol% B₂O₃, or at least 7.0 mol% B₂O₃, based on all oxides present in the glass composition. In one embodiment, the glass composition comprises 20.0 mol% B₂O₃ or less, 18.0 mol% B₂O₃ or less, 16.0 mol% B₂O₃ or less, 14.0 mol% B₂O₃ or less, or 12.0 mol% B₂O₃ or less, based on all oxides present in the glass composition. In one embodiment, the glass composition comprises 5.0 to 20.0 mol% B₂O₃, 5.5 to 18.0 mol% B₂O₃, 6.0 to 16.0 mol% B₂O₃, 6.5 to 14.0 mol% B₂O₃, or 7.0 to 12.0 mol% B₂O₃, based on all oxides present in the glass composition.

In one embodiment, the glass composition comprises at least 2.0 mol% Al₂O₃, at least 3.0 mol% Al₂O₃, at least 4.0 mol% Al₂O₃, or at least 5.0 mol% Al₂O₃, based on all oxides present in the glass composition. In one embodiment, the glass composition comprises 10.0 mol% Al₂O₃ or less, 9.0 mol% Al₂O₃ or less, 8.0 mol% Al₂O₃ or less, or 7.0 mol% Al₂O₃ or less, based on all oxides present in the glass composition. In one embodiment, the glass composition comprises 2.0 to 10.0 mol% Al₂O₃, 3.0 to 9.0 mol% Al₂O₃, 4.0 to 8.0 mol% Al₂O₃, or 5.0 to 7.0 mol% Al₂O₃, based on all oxides present in the glass composition.

In one embodiment, the glass composition comprises at least 0 mol% Fe₂O₃, at least 0.2 mol% Fe₂O₃, or at least 0.5 mol% Fe₂O₃, based on all oxides present in the glass composition. In one embodiment, the glass composition comprises 2.0 mol% Fe₂O₃ or less, 1.5 mol% Fe₂O₃ or less, or 1.2 mol% Fe₂O₃ or less, based on all oxides present in the glass composition. In one embodiment, the glass composition comprises 0 to 2.0 mol% Fe₂O₃, 0.2 to 1.5 mol% Fe₂O₃, or 0.5 to 1.2 mol% Fe₂O₃, based on all oxides present in the glass composition.

In one embodiment, the glass composition comprises at least 2 mol% Na₂O, at least 4 mol% Na₂O, or at least 6 mol% Na₂O, based on all oxides present in the glass composition. In one embodiment, the glass composition comprises 10 mol% Na₂O or less, 9 mol% Na₂O or less, or 8 mol% Na₂O or less, based on all oxides present in the glass composition. In one embodiment, the glass composition comprises 2 to 10 mol% Na₂O, 4 to 9 mol% Na₂O, or 6 to 8 mol% Na₂O, based on all oxides present in the glass composition.

In one embodiment, the glass composition comprises at least 0.0 mol% K₂O, at least 0.2 mol% K₂O, or at least 0.5 mol% K₂O, based on all oxides present in the glass composition. In one embodiment, the glass composition comprises 5.0 mol% K₂O or less, 3.5 mol% K₂O or less, 2.5 mol% K₂O or less, 2.0 mol% K₂O or less, or 1.5 mol% K₂O or less, based on all oxides present in the glass composition. In one embodiment, the glass composition comprises 0.0 to 5.0 mol% K₂O, 0.2 to 3.5 mol% K₂O, or 0.5 to 2.5 mol% K₂O, based on all oxides present in the glass composition.

In one embodiment, the glass composition comprises at least 0.0 mol% BaO, at least 0.2 mol% BaO, or at least 0.5 mol% BaO, based on all oxides present in the glass composition. In one embodiment, the glass composition comprises 3.0 mol% BaO or less, 2.5 mol% BaO or less, or 2.0 mol% BaO or less, based on all oxides present in the glass composition. In one embodiment, the glass composition comprises 0.0 to 3.0 mol% BaO, 0.2 to 2.5 mol% BaO, or 0.5 to 2.0 mol% BaO, based on all oxides present in the glass composition.

In one embodiment, the glass composition comprises at least 0.0 mol% CaO, at least 0.2 mol% CaO, or at least 0.5 mol% CaO, based on all oxides present in the glass composition. In one embodiment, the glass composition comprises 3.0 mol% CaO or less, 2.5 mol% CaO or less, or 2.0 mol% CaO or less, based on all oxides present in the glass composition. In one embodiment, the glass composition comprises 0.0 to 3.0 mol% CaO, 0.2 to 2.5 mol% CaO, or 0.5 to 2.0 mol% CaO, based on all oxides present in the glass composition.

In one embodiment, the glass composition comprises at least 0.0 mol% TiO₂, at least 1.0 mol% TiO₂, at least 2.0 mol% TiO₂, at least 3.0 mol% TiO₂, or at least 4.0 mol% TiO₂, based on all oxides present in the glass composition. In one embodiment, the glass composition comprises 10.0 mol% TiO₂ or less, 9.0 mol% TiO₂ or less, 8.0 mol% TiO₂ or less, 7.0 mol% TiO₂ or less, or 6.0 mol% TiO₂ or less, based on all oxides present in the glass composition. In one embodiment, the glass composition comprises 0.0 to 10.0 mol% TiO₂, 1.0 to 9.0 mol% TiO₂, 2.0 to 8.0 mol% TiO₂, 3.0 to 7.0 mol% TiO₂, or 4.0 to 6.0 mol% TiO₂, based on all oxides present in the glass composition.

In one embodiment of the glass tube for pharmaceutical containers, the glass tube comprises a glass composition, wherein the glass composition comprises one or more fining agents, e.g. a fining agent selected from the list of arsenic oxide, antimony oxide, tin oxide, cerium oxide, chlorides, sulfates and combinations thereof.

It is advantageous to use a fining agent in the glass composition to allow for bubble formation and bubble escape from the glass melt during the production process of the glass tube for pharmaceutical containers.

In one embodiment of the glass tube for pharmaceutical containers, the glass composition comprises a fining agent selected from the list of arsenic oxide, antimony oxide, and tin oxide.

In one embodiment of the glass tube for pharmaceutical containers, the glass composition comprises a fining agent selected from the list of chlorides, sulfates and combinations thereof.

In one embodiment, the glass composition has a viscosity of 10² dPas at a temperature above 1580 °C.

### Glass tube dimensions and set of glass tubes

In one embodiment, the glass tube has an inner diameter from 5.0 to 49.0 mm, preferably 9.0 to 26 mm, and/or an outer diameter from 6.0 to 50 mm, preferably 8.0 to 30 mm, and/or a glass wall thickness of 0.5 to 2.0 mm, preferably 0.6 to 1.5 mm, and/or a length from 1100 to 5000 mm, preferably 1500 to 2000 mm.

In one embodiment of the glass tube for pharmaceutical containers, the glass tube has an inner diameter from 5.0 to 49.0 mm, 6.0 to 45.0 mm, 7.0 to 40.0 mm, 8.0 to 35.0 mm, or 9.0 to 26 mm.

In one embodiment of the glass tube for pharmaceutical containers, the glass tube has an outer diameter from 6.0 to 50 mm, 7.0 to 40 mm, or 8.0 to 30 mm.

In one embodiment of the glass tube for pharmaceutical containers, the glass tube has a glass wall thickness of 0.5 to 2.0 mm, 0.6 to 1.5 mm, 0.7 to 1.3 mm, or 0.8 to 1.2 mm.

In one embodiment of the glass tube for pharmaceutical containers, the glass tube has a length from 1100 to 5000 mm, 1200 to 3000 mm, or 1500 to 2000 mm.

In one embodiment a set is provided comprising at least 50 glass tubes, at least 100 glass tubes, or at least 200 glass tubes. In one embodiment a set is provided comprising 1000 glass tubes or less, 700 glass tubes or less, or 500 glass tubes or less.

### Process for the production of a glass tube

In a third aspect, the invention relates to a process for the production of a glass tube for pharmaceutical as defined in claim 12.

The inventors have thus established a process for the production of a glass tube for pharmaceutical containers which avoids the problems known in the art and thereby provides a glass tube which is devoid of or at least minimises deposited material which may be observed on the inner surface.

The process according to the invention provides a glass tube for pharmaceutical containers in which one of the open ends is formed into a closed end and wherein a ventilation hole is introduced into the glass tube and ensures an improvement in the inner surface conditions by means of employing suction during at least part of the introduction step and/or directly after the introduction step. It has been observed that during the high temperatures needed for the introduction of a ventilation hole into the glass tube parts of the glass composition may evaporate and subsequently condense on the inner surface of the glass tube, foremost in the vicinity near the closed end. In rare and extreme cases even visible deposits, such as e.g. micron-sized water stains, have been observed. The process according to the invention thus provides an effective counter-measure against deterioration of glass tubes during their manufacture into glass vials, glass ampoules, glass cartridges or glass syringes, and concomitantly ensures high-quality glass tubes by withdrawing any unwanted chemicals, species as part of the process.

According to the third aspect of the invention, the glass tube has an inner surface and an outer surface, an inner diameter dᵢ and an outer diameter dₒ, a length lₐ along its longitudinal axis, a first end and a second end, a first location, wherein the first location is at a distance of 400 mm from the first end, the glass tube having a first intermediate location, wherein the first intermediate location is at a distance of 15 mm from the first end, wherein a first vicinity is defined as the inner surface of the glass tube between the first intermediate location and the first location, wherein the introduction of the ventilation hole into the glass tube is in the first vicinity of the glass tube.

The placement or introduction of the ventilation hole in the first vicinity of the glass tube has a number of practical benefits in the final product. For example, the part of the glass tube with the ventilation hole can be easily removed by cutting or burning without substantial loss of glass material. During the process for the production of a glass tube the introduction of the ventilation hole in or near the first vicinity is advantageous also from a machine design. That is to say, the machine part providing for suction does not need to be introduced very deeply into the glass tube.

According to the third aspect of the invention, the employment of suction during the introduction step is accompanied by heating of the glass tube in the first vicinity of the glass tube to a temperature of at least 100 °C, at least 150 °C, or at least 200 °C. In one embodiment of the process, the employment of suction during the introduction step is accompanied by heating of the glass tube in the first vicinity of the glass tube to a temperature of 400 °C or less, 350 °C or less, or 300 °C or less. In one embodiment of the process, the employment of suction during the introduction step is accompanied by heating of the glass tube in the first vicinity of the glass tube to a temperature of 100 °C to 400 °C, 150 °C to 350 °C, or 200 °C to 300 °C.

Advantageously, heating the glass tube in the first vicinity in combination with the employment of suction provides for an efficient removal of those species that tend to condensate and/or sublimate, such as sodium salts, e.g. NaCl and/or NaF, and/or borates, e.g. sodium borate, which may emanate through evaporation from the glass during the introduction of ventilation holes into the glass tube.

In one embodiment of the process, the employment of suction under stationary conditions effects an average air flow rate of 5 to 50 m s⁻¹, preferably 15 to 25 m s⁻¹ inside the glass tube. Advantageously, a suitable air flow rate may additionally benefit the efficient removal of those species that tend to condensate and/or sublimate, such as sodium salts, e.g. NaCl and/or NaF, and/or borates, e.g. sodium borate, which may emanate through evaporation from the glass during the introduction of ventilation holes into the glass tube.

The skilled artisan appreciates that sodium salts, e.g. NaCl and/or NaF, and/or borates, e.g. sodium borate, are typical components of glasses for pharmaceutical containers whose chemical properties bring about sublimation and/or condensation effects during the high temperatures employed for the production of glass tubes, in particular during the introduction of a ventilation hole.

In one embodiment of the process, the introduction of the ventilation hole starts at time point t₀ and ends at time point t₂, and wherein the employment of suction starts at time point t₁ and ends at time point t₃, wherein t₁ is between t₀ and t₂, and wherein t₃ is after t₂.

Advantageously, the timing between the introduction of the ventilation hole and the employment of suction is optimised in such a way which allows and provides for an efficient removal of those species that tend to condensate and/or sublimate, such as sodium salts, e.g. NaCl and/or NaF, and/or borates, e.g. sodium borate, at a time window when they may typically emanate through evaporation from the glass during the process.

### Examples and methods

### Fluorescence spectroscopy

A fluorescence spectrometer FLUOROLOG 3 of Horiba (PE-4-0503) was used.

Samples were placed and measured in a 45° geometry, providing for a right angle between excitation and emission beam. Samples were placed in a sample chamber in such a way that the UV light beam enters the glass tube and is reflected inside the wall of the glass tube by way of total internal reflection. Upon passing through the glass wall, UV light excites fluorescent species present in the glass composition, such as Fe₂O₃, TiO₂, ZrO₂, CeO₂, As₂O₃, K₂O, whose emission is detected in a right angle with respect to the excitation beam. In case the glass tube shows deviations on the inner surface, such as e.g. deposits, physical changes affecting the surface roughness, or precipitation of volatile components (such as borates and halogenides), total internal reflection is frustrated which leads to an at least partial loss of excitation light. This loss in excitation light intensity effects a lower fluorescence emission, which thereby serves as a sensitive read-out for any deviations or inhomogeneities on the inner surface of the glass tube.

The following spectrometer settings were employed: a lit width for excitation and emission of 10 nm, integration time for steady state measurements of 0.1 s, and a wavelength sampling of 1 nm. The measurement uncertainty (k=2) of the assay has been estimated to +/- 2.0% for the fluorescence intensity and +/- 1 nm for the wavelength.

The samples were first subjected to an assessment under a 254 nm excitation lamp to visually judge the fluorescence and homogeneity, and to look for areas that appear inhomogeneous which were identified and prepared for the test. Fluorescence emission of six samples was determined to measure the glass-inherent fluorescence.

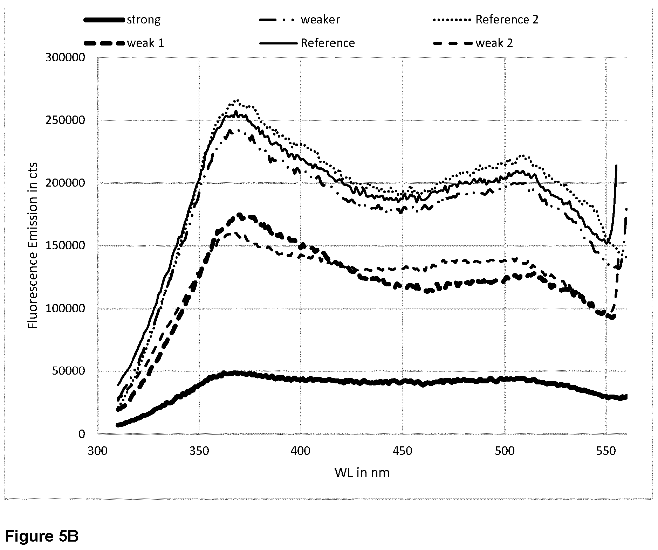

An excitation wavelength of 290 nm was used which has proven to provide an efficient excitation for the glass compositions used as part of the invention (Figure 5B). Differences between the measured intensities between individual samples are larger than the relative measurement uncertainty of +/- 3% during the initial fluorescence measurements.

### ToF-SIMS (Time-of-Flight Secondary-Ion-Mass-Spectrometry)

The ToF-SIMS technique is based on the erosion of a surface by a sputter ion-beam. The secondary ions produced by the primary ion beam are extracted from the surface and detected by mass separation. The generated depth profiles provide information on the qualitative surface composition for different ion species.

A TOF-SIMS IV (ION-TOF GmbH) instrument was employed, using Ga⁺ at 25 keV as primary ion at a primary ion current of 1 pA, at a mass resolution Δm/m at mass 65: >5000, an analysis area of 50 x 50 µm², and using O₂⁺ at 1 keV as a sputter ion and at a sputter ion current of 300 nA, a sputter area of 300 x 300 µm², and employing an electron floodgun for charge compensation.

For the data evaluation all counts of ions were normalized to the ³⁰Si⁺ ions which are, by definition, set to 1.

The sputter depth was determined by subsequent measurement of the crater depth using white-light microscopy. The quotient between integrated intensities of Na₂F⁺ and ³⁰Si⁺ was calculated within the outer 100 nm layer of the surface, being Σ Na₂F⁺ / Σ ³⁰Si⁺.

ToF-SIMS data were acquired and interpreted applying the standards ASTM E 1829 - 14 (2014; Standard Guide for Handling Specimens Prior to Surface Analysis) and ASTM E 2695 - 09 (2009; Standard Guide for Interpretation of Mass Spectral Data Acquired with Time-of-Flight Secondary Ion Mass Spectroscopy). Specifically, the samples were handled in a way to keep them clean and to avoid the introduction of contaminations. The sampled glass tubes were opened and cracked, glass splinters were removed by blowing air/N₂ before data acquisition.

### Hydrolytic resistance

The hydrolytic resistance is defined as the alkali leachability on the middle section of the inner surface. The alkali leachability on the inner surface is determined as Na₂O equivalents in an eluate prepared according to ISO 4802-2:2010. This measured parameter is then related to the inner surface that has been in contact with the eluate during the ISO 4802-2:2010 method.

To perform the test glass tubes are cut in respective segments, representing the middle section, each segment having a length of at least 25 mm, while alternatively also lengths of 50 mm and 60 mm are possible.

Referring to point 8.3 of ISO 4802-2:2010, each glass tube segment is capped from one open end, by definition referred to as the bottom end, with a silicone rubber plug. After filling with test water, the glass tube segment is capped at the other open end with aluminium foil. Before their first use, the silicone rubber plugs are cleaned, and the lack of alkali leachability from the silicone rubber plugs is confirmed. After each use the silicone rubber plugs are cleaned. The filling volume with distilled water is determined according to point 7.2.1 or point 7.2.2 of ISO 4802-2:2010 depending on the inner (or bore) diameter of the glass tube segment, i.e. dᵢ ≤ 20 mm or dᵢ > 20 mm, respectively.

## Claims

1. Glass tube for pharmaceutical containers, the glass tube having an inner surface and an outer surface, the glass tube having an inner diameter dᵢ and an outer diameter dₒ, the glass tube having a first end and a second end, the glass tube having a first location, wherein the first location is at a distance of 400 mm from the first end, the glass tube having a first intermediate location, wherein the first intermediate location is at a distance of 15 mm from the first end,
wherein the first end is formed into a first closed end, wherein preferably also the second end is formed into a second closed end,
wherein a ventilation hole is located within a first vicinity of the first closed end, wherein the first vicinity is between the first intermediate location and the first location,
wherein ToF-SIMS signals are measurable on the inner surface in the first vicinity, including an Na₂F⁺ signal and an ³⁰Si⁺ signal, wherein an area on the inner surface in the first vicinity, having a ratio of an integrated Na₂F⁺ signal to an integrated ³⁰Si⁺ signal of at least 0.10, is 36 mm² or less, wherein the Na₂F⁺ signal and the ³⁰Si⁺ signal are integrated over a depth of 100 nm.

2. Glass tube according to claim 1, wherein the area is 25 mm² or less, 16 mm² or less, 1 mm² or less, and preferably 0 mm².

3. Glass tube for pharmaceutical containers, the glass tube having an inner surface and an outer surface, the glass tube having an inner diameter dᵢ and an outer diameter dₒ, the glass tube having a first end and a second end, the glass tube having a first location, wherein the first location is at a distance of 400 mm from the first end, the glass tube having a first intermediate location, wherein the first intermediate location is at a distance of 15 mm from the first end,
wherein the first end is formed into a first closed end, wherein preferably also the second end is formed into a second closed end,
wherein a ventilation hole is located within a first vicinity of the first closed end, wherein the first vicinity is between the first intermediate location and the first location,
the glass tube having a length lₐ along its longitudinal axis, the glass tube further having a middle section, wherein the middle section extends to a distance of 5 dᵢ centred around the position of 0.5 lₐ along the longitudinal axis,
wherein the glass tube has a ratio between the fluorescence emission determined at the first vicinity and the fluorescence emission determined at the middle section of at least 0.6.

4. Glass tube according to any one of the preceding claims, wherein the inner surface comprises a deposit located in the first vicinity, wherein the deposit has a deposit area extending parallel to the inner surface of the glass tube, wherein the deposit area is 0.01 mm² to 36 mm², and wherein the deposit has a ToF-SIMS signal measurable on the inner surface in the first vicinity, including an Na₂F⁺ signal and an ³⁰Si⁺ signal, having a ratio of an integrated Na₂F⁺ signal to an integrated ³⁰Si⁺ signal of 0.0002 to less than 0.10, wherein the Na₂F⁺ signal and the ³⁰Si⁺ signal are integrated over a depth of 100 nm.

5. Glass tube according to claim 4, wherein the deposit area is 0.01 mm² to 1 mm² and wherein the deposit comprises a ratio of an integrated Na₂F⁺ signal to an integrated ³⁰Si signal of 0.0002 to less than 0.025, or wherein the deposit area is 0.01 mm² to 36 mm² and wherein the deposit comprises a ratio of an integrated Na₂F⁺ signal to an integrated ³⁰Si signal of 0.0002 to less than 0.025.

6. Glass tube according to any one of the preceding claims, wherein at least 90% of the inner surface of the first vicinity, preferably at least 99%, are **characterised by** a ratio of an integrated Na₂F⁺ signal to an integrated ³⁰Si signal of 0.0002 to less than 0.025, wherein the Na₂F⁺ signal and the ³⁰Si⁺ signal are integrated over a depth of 100 nm.

7. Glass tube according to any one of the preceding claims, the glass tube having a "hydrolytic resistance" which is defined as the alkali leachability on the middle section of the inner surface, determined as Na₂O equivalents in an eluate prepared according to ISO 4802-2:2010, wherein the hydrolytic resistance is less than 0.5 µg cm⁻², less than 0.4 µg cm⁻², less than 0.3 µg cm⁻², less than 0.2 µg cm⁻², or less than 0.1 µg cm⁻².

8. Glass tube according to any one of the preceding claims, comprising a glass composition selected from the list of soda-lime glass, borosilicate glass, aluminosilicate glass, a glass comprising from 5 mol% to 20 mol% B₂O₃, based on all oxides present in the glass composition.

9. Glass tube according to any one of the preceding claims, comprising a glass composition comprising 60 to 85 mol% SiO₂, 5 to 20 mol% B₂O₃, 2 to 10 mol% Al₂O₃, 0 to 2 mol% Fe₂O₃, 2 to 10 mol% Na₂O, 0 to 5 mol% K₂O, 0 to 2 mol% BaO, 0 to 2 mol% CaO, 0 to 10 mol% TiO₂, based on all oxides present in the glass composition.

10. Glass tube according to any one of the preceding claims, wherein the glass tube has
- an inner diameter dᵢ from 5.0 to 49.0 mm, preferably 9.0 to 26 mm, and/or
- an outer diameter dₒ from 6.0 to 50 mm, preferably 8.0 to 30 mm, and/or
- a glass wall thickness WT of 0.5 to 2.0 mm, preferably 0.6 to 1.5 mm, and/or
- a length lₐ from 1100 to 5000 mm, preferably 1200 to 3000 mm, more preferably 1500 to 2000 mm.

11. A set of glass tubes comprising at least 50 glass tubes according to any one of the preceding claims, preferably at least 100 glass tubes.

12. Process for the production of a glass tube for pharmaceutical containers comprising the steps of
- providing a glass melt comprising volatile components, such as e.g. borates, preferably melting a batch of raw materials yielding the oxides comprised in the glass melt;
- forming the glass melt into a glass tube, e.g. by drawing;
- forming the glass tube into a glass tube with a first end and a second end;
- forming the first end into a first closed end;
- introducing a ventilation hole into the glass tube;
- employing suction during at least part of the introduction step and/or directly after the introduction step; and
- optionally forming and/or sealing the second end into a second closed end,
the glass tube having an inner surface and an outer surface, the glass tube having an inner diameter dᵢ and an outer diameter dₒ, the glass tube having a length lₐ along its longitudinal axis, the glass tube having a first end and a second end, the glass tube having a first location, wherein the first location is at a distance of 400 mm from the first end, the glass tube having a first intermediate location, wherein the first intermediate location is at a distance of 15 mm from the first end, wherein a first vicinity is defined as the inner surface of the glass tube between the first intermediate location and the first location,
wherein the introduction of the ventilation hole into the glass tube is in the first vicinity of the glass tube,
wherein the employment of suction during the introduction step is accompanied by heating of the glass tube in the first vicinity of the glass tube to a temperature of at least 100 °C.

13. Process according to claim 12, wherein the employment of suction under stationary conditions effects an average air flow rate of 5 to 50 m s⁻¹, preferably 15 to 25 m s⁻¹ inside the glass tube, and/or
wherein the introduction of the ventilation hole starts at time point t₀ and ends at time point t₂, and wherein the employment of suction starts at time point t₁ and ends at time point t₃, wherein t₁ is between t₀ and t₂, and wherein t₃ is after t₂, and/or
comprising the additional step of screening the glass tube, wherein the screening is performed by measuring fluorescence emission.

## Patentansprüche

1. Glasrohr für pharmazeutische Behälter, wobei das Glasrohr eine Innenfläche und eine Außenfläche aufweist, wobei das Glasrohr einen Innendurchmesser dᵢ und einen Außendurchmesser dₒ aufweist, wobei das Glasrohr ein erstes Ende und ein zweites Ende aufweist, wobei das Glasrohr eine erste Position aufweist, wobei sich die erste Position in einem Abstand von 400 mm vom ersten Ende befindet, wobei das Glasrohr eine erste Zwischenposition aufweist, wobei sich die erste Zwischenposition in einem Abstand von 15 mm vom ersten Ende befindet,
wobei das erste Ende als ein erstes geschlossenes Ende ausgebildet ist, wobei vorzugsweise auch das zweite Ende als ein zweites geschlossenes Ende ausgebildet ist,
wobei sich ein Ventilierungsloch in einer ersten Umgebung des ersten geschlossenen Endes befindet, wobei die erste Umgebung zwischen der ersten Zwischenposition und der ersten Position liegt,
wobei ToF-SIMS-Signale auf der Innenfläche in der ersten Umgebung messbar sind, einschließlich eines Na₂F⁺-Signals und eines ³⁰Si⁺-Signals, wobei eine Teilfläche auf der Innenfläche in der ersten Umgebung, die ein Verhältnis des integrierten Na₂F⁺-Signals zum integrierten ³⁰Si⁺-Signal von mindestens 0,10 aufweist, 36 mm² oder weniger beträgt, wobei das Na₂F⁺-Signal und das ³⁰Si⁺-Signal über eine Tiefe von 100 nm integriert werden.

2. Glasrohr nach Anspruch 1, wobei die Teilfläche 25 mm² oder weniger, 16 mm² oder weniger, 1 mm² oder weniger und vorzugsweise 0 mm² beträgt

3. Glasrohr für pharmazeutische Behälter, wobei das Glasrohr eine Innenfläche und eine Außenfläche aufweist, wobei das Glasrohr einen Innendurchmesser dᵢ und einen Außendurchmesser dₒ aufweist, wobei das Glasrohr ein erstes Ende und ein zweites Ende aufweist, wobei das Glasrohr eine erste Position aufweist, wobei sich die erste Position in einem Abstand von 400 mm vom ersten Ende befindet, wobei das Glasrohr eine erste Zwischenposition aufweist, wobei sich die erste Zwischenposition in einem Abstand von 15 mm vom ersten Ende befindet,
wobei das erste Ende als ein erstes geschlossenes Ende ausgebildet ist, wobei vorzugsweise auch das zweite Ende als ein zweites geschlossenes Ende ausgebildet ist,
wobei sich ein Ventilierungsloch in einer ersten Umgebung des ersten geschlossenen Endes befindet, wobei sich die erste Umgebung zwischen der ersten Zwischenposition und der ersten Position befindet,
wobei das Glasrohr entlang seiner Längsachse eine Länge lₐ aufweist, wobei das Glasrohr ferner einen Mittelabschnitt aufweist, wobei sich der Mittelabschnitt, zentriert um die Position von 0,5 lₐ entlang der Längsachse, bis zu einem Abstand von 5 dᵢ erstreckt
wobei das Glasrohr ein Verhältnis zwischen der in der ersten Umgebung bestimmten Fluoreszenzemission und der im Mittelabschnitt bestimmten Fluoreszenzemission von mindestens 0,6 aufweist.

4. Glasrohr nach einem der vorangehenden Ansprüche, wobei die Innenfläche eine in der ersten Umgebung angeordnete Abscheidung aufweist, wobei die Abscheidung eine Abscheidungsfläche aufweist, die sich parallel zur Innenfläche des Glasrohrs erstreckt, wobei die Abscheidungsfläche 0,01 mm² bis 36 mm² beträgt, und wobei die Abscheidung ein auf der Innenfläche in der ersten Umgebung messbares ToF-SlMS-Signal, das ein Na₂F⁺-Signal und ein ³⁰Si⁺-Signal aufweist, mit einem Verhältnis des integrierten Na₂F⁺-Signals zum integrierten ³⁰Si⁺-Signal von 0,0002 bis weniger als 0,10 aufweist, wobei das Na₂F⁺-Signal und das ³⁰Si⁺-Signal über eine Tiefe von 100 nm integriert werden.

5. Glasrohr nach Anspruch 4, wobei die Abscheidungsfläche 0,01 mm² bis 1 mm² beträgt, und wobei die Abscheidung ein Verhältnis des integrierten Na₂F⁺-Signals zum integrierten ³⁰Si⁺-Signal von 0,0002 bis weniger als 0,025 aufweist, oder wobei die Abscheidungsfläche 0,01 mm² bis 36 mm² beträgt und wobei die Abscheidung ein Verhältnis des integrierten Na₂F⁺-Signals zum integrierten ³⁰Si⁺-Signal von 0,0002 bis weniger als 0,025 aufweist.

6. Glasrohr nach einem der vorangehenden Ansprüche, wobei mindestens 90% der Innenfläche der ersten Umgebung, vorzugsweise mindestens 99%, durch ein Verhältnis des integrierten Na₂F⁺-Signals zum integrierten ³⁰Si⁺-Signal von 0,0002 bis weniger als 0,025 gekennzeichnet sind, wobei das Na₂F⁺-Signal und das ³⁰Si⁺-Signal über eine Tiefe von 100 nm integriert werden.

7. Glasrohr nach einem der vorangehenden Ansprüche, wobei das Glasrohr eine "hydrolytische Beständigkeit" aufweist, die definiert ist als die Alkali-Auslaugbarkeit am Mittelabschnitt der Innenfläche, bestimmt als Na₂O-Äquivalente in einem gemäß ISO 4802-2:2010 präparierten Eluat, wobei die hydrolytische Beständigkeit weniger als 0,5 µg cm⁻², weniger als 0,4 µg cm⁻², weniger als 0,3 µg cm⁻², weniger als 0,2 µg cm⁻² oder weniger als 0,1 µg cm⁻² beträgt.

8. Glasrohr nach einem der vorangehenden Ansprüche, aufweisend eine Glaszusammensetzung, die ausgewählt ist aus der Liste Kalk-Natron-Glas, Borosilikatglas, Aluminosilikatglas und einem Glas, das 5 Mol-% bis 20 Mol-% B₂O₃, bezogen auf alle in der Glaszusammensetzung vorhandenen Oxide, aufweist.

9. Glasrohr nach einem der vorangehenden Ansprüche, aufweisend eine Glaszusammensetzung, die 60 bis 85 Mol-% SiO₂, 5 bis 20 Mol-% B₂O₃, 2 bis 10 Mol-% Al₂O₃, 0 bis 2 Mol-% Fe₂O₃, 2 bis 10 Mol-% Na₂O, 0 bis 5 Mol-% K₂O, 0 bis 2 Mol-% BaO, 0 bis 2 Mol-% CaO, 0 bis 10 Mol-% TiO₂, bezogen auf alle in der Glaszusammensetzung vorhandenen Oxide, aufweist.

10. Glasrohr nach einem der vorangehenden Ansprüche, wobei das Glasrohr aufweist:
einen Innendurchmesser dᵢ von 5,0 bis 49,0 mm, vorzugsweise 9,0 bis 26 mm; und/oder
einen Außendurchmesser dₒ von 6,0 bis 50 mm, vorzugsweise 8,0 bis 30 mm; und/oder
eine Glaswanddicke WT von 0,5 bis 2,0 mm, vorzugsweise 0,6 bis 1,5 mm; und/oder
eine Länge lₐ von 1100 bis 5000 mm, vorzugsweise 1200 bis 3000 mm, noch bevorzugter 1500 bis 2000 mm.

11. Satz von Glasrohren, aufweisend mindestens 50 Glasrohre nach einem der vorangehenden Ansprüche, vorzugsweise mindestens 100 Glasrohre.

12. Verfahren zum Herstellen eines Glasrohrs für pharmazeutische Behälter, aufweisend die Schritte:
Bereitstellen einer Glasschmelze, die flüchtige Bestandteile, wie z.B. Borate, enthält, vorzugsweise durch Schmelzen einer Rohstoffcharge, aus der die in der Glasschmelze enthaltenen Oxide gewonnen werden;
Formen der Glasschmelze zu einem Glasrohr, z.B. durch Ziehen;
Formen des Glasrohrs zu einem Glasrohr mit einem ersten Ende und einem zweiten Ende;
Ausbilden des ersten Endes zu einem ersten geschlossenen Ende;
Einbringen eines Ventilierungslochs in das Glasrohr;
Anwenden eines Unterdrucks während zumindest eines Teils des Schritts zum Einbringen eines Ventilierungslochs und/oder unmittelbar nach dem Schritt zum Einbringen eines Ventilierungslochs; und
optional Formen des zweiten Endes zu einem zweiten geschlossenen Ende und/oder Versiegeln des zweiten Endes,
wobei das Glasrohr eine Innenfläche und eine Außenfläche aufweist, das Glasrohr einen Innendurchmesser dᵢ und einen Außendurchmesser dₒ aufweist, das Glasrohr eine Länge lₐ entlang seiner Längsachse aufweist, das Glasrohr ein erstes Ende und ein zweites Ende aufweist, das Glasrohr eine erste Position aufweist, wobei sich die erste Position in einem Abstand von 400 mm vom ersten Ende befindet, das Glasrohr eine erste Zwischenposition aufweist, wobei die erste Zwischenposition sich in einem Abstand von 15 mm vom ersten Ende befindet, wobei eine erste Umgebung als die Innenfläche des Glasrohrs zwischen der ersten Zwischenposition und der ersten Position definiert ist,
wobei das Einbringen des Ventilierungslochs im Glasrohr in der ersten Umgebung des Glasrohrs erfolgt,
wobei das Anwenden von Unterdruck während des Schritts zum Einbringen des Ventilierungslochs mit einer Erwärmung des Glasrohrs in der ersten Umgebung des Glasrohrs auf eine Temperatur von mindestens 100°C einhergeht.

13. Verfahren nach Anspruch 12, wobei das Anwenden von Unterdruck unter stationären Bedingungen einen durchschnittlichen Luftdurchsatz von 5 bis 50 m s⁻¹, vorzugsweise 15 bis 25 m s⁻¹, im Inneren des Glasrohrs bewirkt, und/oder
wobei das Einbringen des Ventilierungslochs zum Zeitpunkt t₀ beginnt und zum Zeitpunkt t₂ endet, und wobei das Anwenden von Unterdruck zum Zeitpunkt t₁ beginnt und zum Zeitpunkt t₃ endet, wobei t₁ zwischen t₀ und t₂ liegt und wobei t₃ nach t₂ liegt; und/oder
aufweisend den zusätzlichen Schritt zum Prüfen des Glasrohrs, wobei das Prüfen durch Messen der Fluoreszenzemission ausgeführt wird.

## Revendications

1. Tube de verre pour récipients pharmaceutiques, le tube de verre ayant une surface interne et une surface externe, le tube de verre ayant un diamètre interne dᵢ et un diamètre externe dₒ, le tube de verre ayant une première extrémité et une seconde extrémité, le tube de verre ayant un premier emplacement, dans lequel le premier emplacement est à une distance de 400 mm de la première extrémité, le tube de verre ayant un premier emplacement intermédiaire, dans lequel le premier emplacement intermédiaire est à une distance de 15 mm de la première extrémité, dans lequel la première extrémité est formée en une première extrémité fermée, dans lequel de préférence la seconde extrémité est également formée en une seconde extrémité fermée,
dans lequel un trou de ventilation est situé dans un premier voisinage de la première extrémité fermée, dans lequel le premier voisinage est entre le premier emplacement intermédiaire et le premier emplacement,
dans lequel des signaux ToF-SIMS sont mesurables sur la surface interne dans le premier voisinage, incluant un signal *Na*₂*F*⁺ et un signal ³⁰*Si*⁺, dans lequel une zone sur la surface interne dans le premier voisinage, ayant un rapport d'un signal *Na*₂*F*⁺ intégré sur un signal ³⁰Si⁺ intégré d'au moins 0,10 est de 36 *mm*² ou moins, dans lequel le signal *Na*₂*F*⁺ et le signal ³⁰*Si*⁺ sont intégrés sur une profondeur de 100 nm.

2. Tube de verre selon la revendication 1, dans lequel la zone est de 25 *mm*² ou moins, 16 *mm*² ou moins, 1 *mm*² ou moins, et de préférence de 0 *mm*².

3. Tube de verre pour récipients pharmaceutiques, le tube de verre ayant une surface interne et une surface externe, le tube de verre ayant un diamètre interne dᵢ et un diamètre externe *dₒ*, le tube de verre ayant une première extrémité et une seconde extrémité, le tube de verre ayant un premier emplacement, dans lequel le premier emplacement est à une distance de 400 mm de la première extrémité, le tube de verre ayant un premier emplacement intermédiaire, dans lequel le premier emplacement intermédiaire est à une distance de 15 mm de la première extrémité, dans lequel la première extrémité est formée en une première extrémité fermée, dans lequel de préférence la seconde extrémité est également formée en une seconde extrémité fermée,
dans lequel un trou de ventilation est situé dans un premier voisinage de la première extrémité fermée, dans lequel le premier voisinage est entre le premier emplacement intermédiaire et le premier emplacement,
le tube de verre ayant une longueur *Iₐ* le long de son axe longitudinal, le tube de verre ayant en outre une section médiane, dans lequel la section médiane s'étend sur une distance de 5 dᵢ centrée autour de la position de 0,5 *Iₐ* le long de l'axe longitudinal,
dans lequel le tube de verre a un rapport entre l'émission de fluorescence déterminée au niveau du premier voisinage et l'émission de fluorescence déterminée au niveau de la section médiane d'au moins 0,6.

4. Tube de verre selon l'une quelconque des revendications précédentes, dans lequel la surface interne comprend un dépôt situé dans le premier voisinage, dans lequel le dépôt a une zone de dépôt s'étendant parallèlement à la surface interne du tube de verre, dans lequel la zone de dépôt est de 0,01 *mm*² à 36 *mm*², et dans lequel le dépôt a un signal ToF-SIMS mesurable sur la surface interne dans le premier voisinage, incluant un signal *Na₂F*⁺ et un signal³⁰*Si⁺* , ayant un rapport d'un signal *Na*₂*F*⁺ intégré sur un signal ³⁰*Si*⁺ intégré de 0,0002 à moins de 0,10, dans lequel le signal *Na*₂*F*⁺ et le signal ³⁰*Si*⁺ sont intégrés sur une profondeur de 100 nm.

5. Tube de verre selon la revendication 4, dans lequel la zone de dépôt est de 0,01 *mm*² à 1 *mm*² et dans lequel le dépôt comprend un rapport d'un signal *Na*₂*F*⁺ intégré sur un signal ³⁰*Si* intégré de 0,0002 à moins de 0,025, ou dans lequel la zone de dépôt est de 0,01 *mm*² à 36 *mm*² et dans lequel le dépôt comprend un rapport d'un signal *Na*₂*F*⁺ intégré sur un signal ³⁰*Si* intégré de 0,0002 à moins de 0,025.

6. Tube de verre selon l'une quelconque des revendications précédentes, dans lequel au moins 90 % de la surface interne du premier voisinage, de préférence au moins 99 %, sont **caractérisés par** un rapport d'un signal *Na*₂*F*⁺ intégré sur un signal ³⁰*Si* intégré de 0,0002 à moins de 0,025, dans lequel le signal *Na*₂*F⁺* et le signal ³⁰*Si*⁺ sont intégrés sur une profondeur de 100 nm.

7. Tube de verre selon l'une quelconque des revendications précédentes, le tube de verre ayant une "résistance hydrolytique" qui est définie comme la lixiviabilité des alcalis sur la section médiane de la surface interne, déterminée en équivalents *Na*₂*O* dans un éluat préparé selon la norme ISO 4802-2:2010, dans lequel la résistance hydrolytique est inférieure à 0,5 *µg cm*⁻², inférieure à 0,4 *µg cm*⁻², inférieure à 0,3 *µg cm*⁻², inférieure à 0,2 *µg cm*⁻² ou inférieure à 0,1 *µg cm*⁻².

8. Tube de verre selon l'une quelconque des revendications précédentes, comprenant une composition de verre choisie dans la liste constituée par le verre sodo-calcique, le verre borosilicaté, le verre aluminosilicaté, un verre comprenant de 5 % en moles à 20 % en moles de *B*₂*O*₃, sur la base de tous les oxydes présents dans la composition de verre.

9. Tube de verre selon l'une quelconque des revendications précédentes, comprenant une composition de verre comprenant de 60 à 85 % en moles de *Si*O₂, de 5 à 20 % en moles de *B*₂*O*₃, de 2 à 10 % en moles d'*Al*₂*O*₃, de 0 à 2 % en moles de *Fe*₂*O*₃, de 2 à 10 % en moles de *Na*₂*O*, de 0 à 5 % en moles de K₂O, de 0 à 2 % en moles de BaO, de 0 à 2 % en moles de CaO, de 0 à 10 % en moles de *TiO₂* sur la base de tous les oxydes présents dans la composition de verre.

10. Tube de verre selon l'une quelconque des revendications précédentes, dans lequel le tube de verre a
- un diamètre interne *dᵢ* de 5,0 à 49,0 mm, de préférence de 9,0 à 26 mm, et/ou
- un diamètre externe *dₒ* de 6,0 à 50 mm, de préférence de 8,0 à 30 mm, et/ou
- une épaisseur de paroi de verre WT de 0,5 à 2,0 mm, de préférence de 0,6 à 1,5 mm, et/ou
- une longueur *Iₐ* de 1100 à 5000 mm, de préférence de 1200 à 3000 mm, plus préférentiellement de 1500 à 2000 mm.

11. Ensemble de tubes de verre comprenant au moins 50 tubes de verre selon l'une quelconque des revendications précédentes, de préférence au moins 100 tubes de verre.

12. Procédé de production d'un tube de verre pour récipients pharmaceutiques comprenant les étapes de
- fourniture d'une masse fondue de verre comprenant des composants volatils, tels que par ex. des borates, de préférence par fusion d'un lot de matières premières produisant les oxydes compris dans la masse fondue de verre ;
- formation de la masse fondue de verre en un tube de verre, par ex. par étirage ;
- formation du tube de verre en un tube de verre avec une première extrémité et une seconde extrémité ;
- formation de la première extrémité en une première extrémité fermée ;
- introduction d'un trou de ventilation dans le tube de verre ;
- emploi d'une aspiration pendant au moins une partie de l'étape d'introduction et/ou directement après l'étape d'introduction ; et
- éventuellement formation et/ou scellement de la seconde extrémité en une seconde extrémité fermée,
le tube de verre ayant une surface interne et une surface externe, le tube de verre ayant un diamètre interne dᵢ et un diamètre externe *d*ₒ, le tube de verre ayant une longueur *Iₐ* le long de son axe longitudinal, le tube de verre ayant une première extrémité et une seconde extrémité, le tube de verre ayant un premier emplacement, dans lequel le premier emplacement est à une distance de 400 mm de la première extrémité, le tube de verre ayant un premier emplacement intermédiaire, dans lequel le premier emplacement intermédiaire est à une distance de 15 mm de la première extrémité, dans lequel un premier voisinage est défini comme la surface interne du tube de verre entre le premier emplacement intermédiaire et le premier emplacement,
dans lequel l'introduction du trou de ventilation dans le tube de verre se fait dans le premier voisinage du tube de verre,
dans lequel l'emploi d'une aspiration pendant l'étape d'introduction est accompagné par le chauffage du tube de verre dans le premier voisinage du tube de verre à une température d'au moins 100°C.

13. Procédé selon la revendication 12, dans lequel l'emploi de l'aspiration dans des conditions stationnaires produit un débit d'air moyen de 5 à 50 m *s*⁻¹, de préférence de 15 à 25 m *s*⁻¹ à l'intérieur du tube de verre, et/ou
dans lequel l'introduction du trou de ventilation commence à un instant *t*₀ et se termine à un instant *t*₂ et dans lequel l'emploi de l'aspiration commence à un instant *t*₁ et se termine à un instant t₃, dans lequel *t*₁ est entre *t*₀ et *t*₂, et dans lequel *t*₃ est après *t*₂, et/ou
comprenant l'étape supplémentaire d'inspection du tube de verre, dans lequel l'inspection est effectuée en mesurant l'émission de fluorescence.
